Europäisches Patentamt

European Patent Office

Office européen des brevets

(11) Numéro de publication: **0 084 476**
**B1**

(12) **FASCICULE DE BREVET EUROPEEN**

(45) Date de publication du fascicule du brevet:
**29.05.85**

(51) Int. Cl.⁴: **C 02 F 1/42,** B 01 J 49/00

(21) Numéro de dépôt: **83400038.2**

(22) Date de dépôt: **07.01.83**

(54) **Appareil pour le traitement de liquides par résine échangeuse d'ions, plus particulièrement appareil adoucisseur domestique d'eau.**

(30) Priorité: **15.01.82 FR 8200576**

(43) Date de publication de la demande:
**27.07.83 Bulletin 83/30**

(45) Mention de la délivrance du brevet:
**29.05.85 Bulletin 85/22**

(84) Etats contractants désignés:
**BE CH DE GB IT LI**

(56) Documents cités:
**US - A - 3 891 552**
**US - A - 4 275 448**

(73) Titulaire: **PERMO S.A., Société dite:, 9, rue d'Estienne d'Orves, F-92500 Rueil-Malmaison (FR)**

(72) Inventeur: **Le Dall, Guy, 5, Avenue des Marjolaines, F-78310 Maurepas (FR)**

(74) Mandataire: **Armengaud, Charles, Cabinet ARMENGAUD AINE 3, Avenue Bugeaud, F-75116 Paris (FR)**

## Description

La présente invention concerne les appareils pour le traitement de liquides par résine échangeuse d'ions, plus particulièrement les appareils domestiques servant à l'adoucissement de l'eau, ces appareils comportant un dispositif de commande automatique du cycle de régénération de la résine.

Les adoucisseurs d'eau domestiques auxquels se rapporte plus particulièrement l'invention, comportent une cuve de traitement remplie d'une résine échangeuse d'ions. Cette résine s'équise après une certaine durée de fonctionnement au cours de laquelle elle a capté les ions indésirables dans l'eau à traiter et a libéré des ions dont la présence dans l'eau est moins préjudiciable. L'efficacité du traitement disparaît lorsque le lit de résine s'épuise. Cependant, le lit équisé peut être régénéré en y faisant passer une saumure de façon que le processus d'échange d'ions s'inverse. La résine retrouve alors sa capacité d'échange initiale.

De nombreux dispositifs ont déjà été décrits qui permettent le déclenchement automatique du cycle de régénération, par un contrôle précis du moment où la régénération devient nécessaire et une détermination préalable des cadences de régénération. Ainsi un des dispositifs connus utilise une régénération dite »au volume« déclenchée par exemple tous les 3 m³ d'eau passée dans l'adoucisseur: la régénération est alors déclenchée par un organe de commande volumétrique et commence au moment exact de l'équisement prévu de la résine, après passage d'un volume donné d'eau à adoucir. Cependant, comme la régénération est effectuée dans le réacteur de traitement même, l'utilisateur se trouve privé d'eau traitée pendant la régénération.

D'autres dispositifs connus permettent d'éviter de façon plus ou moins satisfaisante cet inconvénient majeur, en provoquant le déclenchement de la régénération à un moment de non consommation, la nuit par exemple.

Ainsi certains dispositifs utilisent la régénération dite »au temps«, déclenchée au jour et à l'heure prédéterminés par de simples minuteries, par exemple tous les 3 jours à 2 heures du matin; d'autres la régénération dite »au volume, décalée dans le temps«, déclenchée par exemple tous les 3 m³ par une commande volumétrique et décalée à 3 heures du matin. L'inconvénient de ces systèmes est que, ne pouvant tenir compte des variations de la consommation d'eau par l'utilisateur, ils doivent être réglés en fonction d'une consommation maximale ce qui entraîne une perte d'efficacité de 20 à 30%, en conséquence avec perte de sel et d'énergie.

Il est connu également (voir le brevet US-A-3.891.552), pour éviter et cette baisse d'efficacité et la privation d'eau traitée pendant la régénération, de monter en parallèle deux adoucisseurs travaillant alternativement, cette régénération dite »en alternance« étant déclenchée en fonction du volume d'eau passant dans chaque adoucisseur, avec mise en régénération immédiate, un appareil étant en service pendant que l'autre se régénère et attend la fin du cycle du premier. Mais ce système présente d'autres inconvénients: le doublement de l'installation donc un encombrement au sol et un coût plus élevés, et surtout le fait que l'adoucisseur en réserve pouvant rester plusieurs jours en attente, des bactéries risquent de s'y développer et de demeurer dans l'eau traitée.

L'adoucisseur d'eau suivant la présente invention pallie ces inconvénients; il permet la régénération au moment voulu sans interruption de la production d'eau traitée et avec un encombrement minimal.

L'appareil suivant l'invention, constitué par une capacité A contenant une résine échangeuse d'ions, et muni d'un dispositif de commande automatique du cycle de régénération de la résine est caractérisé en ce qu'il comporte intérieurement une seconde capacité B contenant un volume de résine échangeuse d'ions suffisant pour maintenir le traitement d'adoucissement de l'eau pendant la régénération des résines échangeuses d'ions de la capacité A.

Les rapports des volumes des résines des capacités B et A sont compris entre 1/12 et 1/5.

La capacité B est disposée à la partie supérieure de la capacité A, au-dessus du lit de résines. Elle est avantageusement solidaire du dispositif de commande automatique du cycle de régénération, l'ensemble étant fixé à la capacité A par un système quelconque, à vis ou autre.

La capacité B est réalisée de préférence en matière plastique injectée dont la résistance mécanique est suffisante puisque, la capacité B étant disposée à l'intérieur de la capacité A, la pression exercée sur les parois interne et externe de B est limitée aux variations de perte de charge.

Le dispositif de déclenchement automatique du cycle de régénération des résines contenues dans les capacités A et B est constitué de préférence par un dispositif de programmation électronique par microprocesseur ayant fait l'objet du brevet américain n° 4 275 448 de la Demanderesse. Ce dispositif comporte deux capteurs de débit pour mesurer les volumes de liquide, eau ou saumure, traversant les résines, associés à des dispositifs électroniques reliés à des vannes électriques permettant le déclenchement et le contrôle des opérations de traitement, de régénération, de lavage et de rinçage en fonction des paramètres désirés et sur la base des signaux provenant des capteurs de débit.

Ces capteurs sont constitués par des turbines tournant dans les deux sens et fonctionnant quel que soit le sens d'écoulement du liquide; ils sont disposés en des points où l'eau circule tantôt de bas en haut, tantôt de haut en bas.

Les dispositions de réglage des différentes opérations font entrer en mémoire du microprocesseur les différents volumes d'eau nécessaires pour les différents stades de la régénération, détassage, asporation, rinçage, pour un volume donné de résine.

Ce réglage automatique est fonction des volumes de liquide passant sur la résine et non pas des pressions. La durée de la régénération varie en fonction des fluctuations de la pression. Ainsi quelle que soit la pression d'eau d'alimentation, le contrôleur de débit règle les automatismes et le réglage se modifie constamment en fonction des pressions d'alimentation.

La régénération de la résine de la capacité A ayant une durée de 30 à 45 minutes, la résine de la capacité B, en service pendant la régénération de la résine de la capacité A, soit pendant 30 à 45 minutes toutes les 100 heures, par exemple donc très peu utilisée, ne nécessite qu'une régénération simple, rapide et espacée.

Le dispositif de réglage automatique utilisé permet en outre, toujours en fonction des volumes utilisés, de connaître les quantités de saumure nécessaires à la régénération. Il est connu en effet de détecter la concentration en sel d'une solution par comparaison entre le volume de solvant entrant dans un bac de dissolution et le volume de solution saturée sortant de ce bac, au moyen d'un compteur volumétrique fonctionnant dans les deux sens qui permet de régler le volume de solvant en fonction de la concentration en sel désirée à la sortie. Par comparaison des volumes on connaît la densité de la solution de la saumure utilisée et le pouvoir d'échange obtenu. Le dispositif de contrôle automatique indique en outre l'affichage en clair de la nécessité ou non de recharger le bac à saumure.

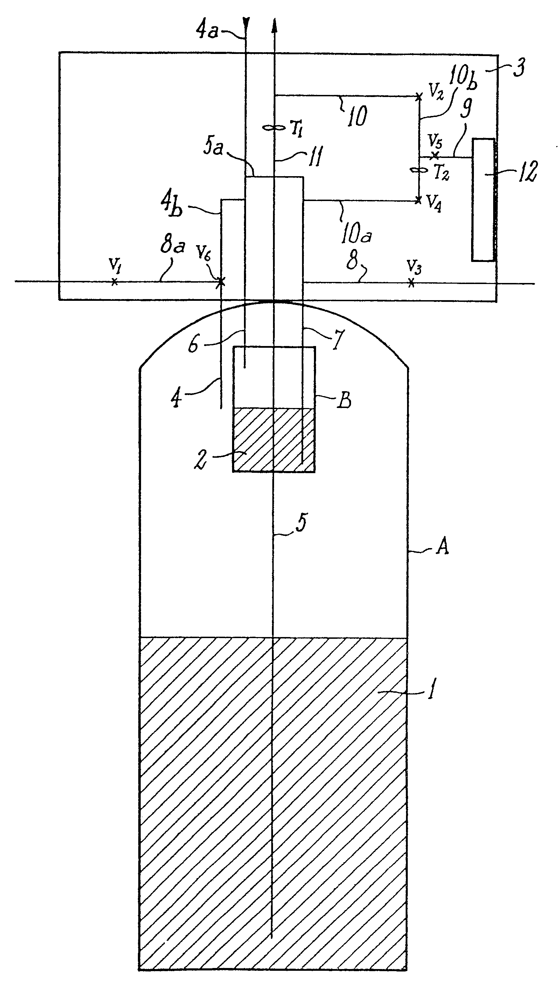

On a décrit ci-après, en référence à la figure unique du dessin annexé, qui repésente schématiquement l'appareil suivant l'invention, une forme de réalisation de cet appareil, donnée simplement à titre d'exemple.

L'adoucisseur suivant l'invention est constitué par une capacité A contenant un certain volume de résine échangeuse d'ions 1, de 14 à 50 litres, à l'intérieur et à la partie supérieure de laquelle est disposée, au-dessus du lit de résines, une capacité B contenant un volume de résine 2 de 2 à 6 litres. Cet ensemble est relié à un dispositif de commande automatique 3 du cycle de régénération des résines.

L'eau à adoucir est amenée à la capacité A à partir d'une canalisation 4a reliée par exemple au réseau de distribution d'eau par un tube plongeur 4. Cette eau est amenée à la capacité B par un tube plongeur 6 branché sur la canalisation 4a. La sortie de l'eau adoucie, après traitement dans la capacité A, s'effectue par le tube plongeur 5 relié à la canalisation 11 allant à la consommation. Sur la canalisation 11 est disposée une turbine $T_1$ à fonctionnement réversible. La sortie d'eau adoucie, après traitement dans la capacité B s'effectue par un tube plongeur 7 raccordé à la canalisation 11. La saumure servant à la régénération des résines contenues dans les capacités A et B se trouve dans un bac 12 relié à ces capacités par un réseau de canalisations 9, 10 et 10a. La canalisation 10 est destinée à introduire la saumure dans la résine se trouvant dans la capacité A; elle est dans ce but reliée à la canalisation se terminant par le tube plongeur 5. La canalisation 10a joue le même rôle vis-à-vis de la capacité B et est reliée au tube plongeur 7. Les canalisations 10, 10a sont branchées, par l'intermédiaire d'une canalisation 10b sur laquelle est disposée la turbine $T_2$ à fonctionnement réversible et d'électrovannes $V_2$ et $V_4$, sur la canalisation 9, d'où part la saumure stockée dans le bac 12. Une vanne $V_5$ est disposée sur la canalisation 9. Enfin des canalisations 8, 8a sur lesquelles sont prévues des électrovannes, respectivement $V_1$ et $V_3$ assurent la mise à l'égoût du fluide sortant des capacités A et B après régénération des résines qu'elles contiennent. Dans ce but, la canalisation 8 est branchée sur le tube plongeur 7. De son côté, la canalisation 8a est reliée au tube plongeur 5 par la partie 4b du tube plongeur 4 et la canalisation 5a. Il convient de noter que, à chaque intersection des diverses canalisations mentionnées ci-dessus, sont prévues des électrovannes qui n'ont été toutes représentées pour la clarté du dessin.

Il convient de noter que les turbines $T_1$ et $T_2$ à fonctionnement réversible assurent la circulation dans le sens voulu, vers l'appareil, dans l'appareil et pour la sortie de ce dernier, des différents fluides.

L'appareil fonctionne de la façon suivante:

— en marche normale, la turbine $T_1$ entre en mouvement en fonction de la consommation d'eau. Les vannes $V_1$, $V_3$, de rejet à l'égoût et $V_2$, $V_4$, $V_5$, de liaison avec le bac à saumure 12 sont fermées. L'eau, sous l'action de la turbine $T_1$ et provenant de la canalisation 4a entre dans la capacité A par le tube plongeur 4. L'eau adoucie sort par le tube plongeur 5. La capacité B, remplie d'eau, est en attente. Le nombre de rotations de la turbine $T_t$ est transmis à et totalisé par un microprocesseur. Le nombre d'impulsions données est fonction du volume de résine utilisée pour le traitement, de la dureté de l'eau traitée et de la quantité de sel devant être aspirée pour la régénération à partir du bac à saumure. Lorsque la quantité programmée automatiquement par le microprocesseur est atteinte, la régénération se déclenche.

— la régénération de la résine 2 contenue dans la capacité B se déclenche la première par aspiration sous l'action de la turbine $T_2$ du volume de saumure programmé et réglable qui agit sur la turbine $T_2$ et provoque l'ouverture des électrovannes $V_4$ et $V_5$ qui régulent la quantité de saumure aspirée. La saumure est introduite dans la masse de résine 2 par le tube plongeur 7 relié à tubulure 10a. Une fois la régénération effectuée les électrovannes $V_4$ et $V_5$ se referment et le rinçage s'effectue par introduction dans la capacité B d'eau provenant de la canalisation 4a au moyen du tube plongeur 6. La vanne 3 s'ouvre pour mise à l'égoût du produit de rinçage. Dès la fin de cette opération, la régénération de la capacité A commence, avec mise en service simultanée de la capacité B, sous l'impulsion de la turbine T₁, avec introduction d'eau à adoucir par le tube plongeur 6 et départ de l'eau adoucie par le tube plongeur 7, relié à la canalisation 11 de sortie de l'eau adoucie vers la consommation.

La régénération de la résine 1 contenue dans la capacité A s'effectue de la façon suivante: sous l'action de la turbine T₂, la quantité voulue de saumure est prélevée du bac 12, la vanne V₅ étant ouverte et la vanne V₄ fermée. La saumure est introduite dans la masse de résine 1 après ouverture de la vanne V₂ par le tube plongeur 5 branché sur la canalisation 10. La régénération achevée, les vannes V₅ et V₂ étant fermées, le rinçage s'effectue par introduction d'eau provenant de la canalisation 4a au moyen du tube plongeur 4. Le produit de rinçage est évacué, toujours sous l'action de la turbine T₁, par le tube plongeur 5, la canalisation 5a et la partie haute 4b du tube plongeur 4 sur laquelle est branchée la canalisation 8a de mise à l'égoût moyennant l'interposition de la vanne V₆. Cette dernière ainsi que la vanne V₁ s'ouvrent. Une fois le produit du rinçage évacué elles se referment et un nouveau cycle peut recommencer.

La turbine T₂ a une triple fonction: elle mesure le volume de saumure aspirée et transmet cette information à la mémoire du microprocesseur qui la transforme en données sur le cycle de l'appareil; elle compare le volume d'eau entrant dans le bac à sel et en ressortant, la différence permettant de connaître avec précision le taux de saturation de la saumure absorbée et transmet cette indication au microprocesseur qui intègre les données et modifie le cycle de l'appareil en fonction de ces données; elle informe en outre l'utilisateur en cas de manque de sel dans le bac à sel, quand les volumes d'eau à l'entrée et à la sortie sont égaux; elle contrôle le remplissage en eau du bac à sel pour la préparation de la saumure.

L'adoucisseur suivant l'invention présente l'avantage d'être économique, par son faible encombrement et aussi par le fait qu'il n'y a pas de coupure d'eau pendant la régénération et que l'on peut effectuer des régénérations plus fréquentes donc avoir un appareil de dimensions réduites.

Un autre avantage est que l'on évite la prolifération bactérienne dans la capacité en attente en procédant à l'opération de régénération de la résine contenue dans la capacité B juste avant sa mise en utilisation.

Par ailleurs, l'adaptation sur cet adoucisseur du dispositif de commande automatique dans lequel toutes les phases de l'opération sont contrôlées de façon volumétrique permet de ne pas tenir compte de la pression du réseau.

Enfin, la totalisation des temps de chaque phase de la régénération et la comparaison avec un temps théorique maximal permet de déceler une éventuelle anomalie: fuite, encrassement et d'en informer l'utilisateur.

## Revendications

1. Appareil pour le traitement de liquides par résine échangeuse d'ions, notamment adoucisseur domestique d'eau, constitué par une capacité (A) contenant une résine échangeuse d'ions et munie d'un dispositif de commande automatique du cycle de régénération de la résine, caractérisé en ce qu'il comporte, disposée à l'intérieur de la capacité (A), une capacité (B) contenant une résine échangeuse d'ions qui assure le traitement du liquide pendant la régénération de la résine contenue dans la capacité (A).

2. Appareil suivant la revendication 1, caractérisé en ce que la capacité (B) contient un volume de résine échangeuse d'ions inférieur à celui contenu dans la capacité (A), mais suffisant pour assurer le traitement du liquide pendant la régénération des résines contenues dans la capacité (A).

3. Appareil suivant l'une des revendications précédentes, caractérisé en ce que les rapports des volumes de résines des capacités (B) et (A) sont compris entre 1/12 et 1/5.

4. Appareil suivant l'une des revendications précédantes, caractérisé en ce qui le dispositif de commande automatique (3) du cycle de régénération des résines déclenche l'opération de régénération de la résine contenue dans la capacité (A) en fonction des volumes de liquide passés sur un volume donné de résines et de la dureté du liquide, notamment de l'eau, traité.

5. Appareil suivant l'une quelconque des revendications précédentes, caractérisé en ce que le dispositif de commande automatique du cycle de régénération de la résine effectue la régénération de la résine contenue dans la capacité (B) immédiatement avant la mise en service de cette capacité.

6. Appareil suivant l'une quelconque des revendications précédentes, caractérisé en ce que le dispositif de commande du cycle de régénération maintient la durée de la régénération de la résine de la capacité (A) entre 30 et 45 minutes.

7. Appareil suivant l'une quelconque des revendications précédentes, caractérisé en ce que le dispositif de commande du cycle de régénération des résines contrôle la régénération en fonction de la quantité de saumure utilisée.

## Patentansprüche

1. Vorrichtung zur Behandlung von Flüssigkeiten mit Ionenaustauschern, insbesondere Wasserenthärter für den Heimgebrauch, bestehend aus einem Behälter (A), der einen Ionenaustau-

scher enthält und mit einer Einrichtung zur automatischen Steuerung des Wiederaufbereitungszyklus des Ionenaustauschers versehen ist, dadurch gekennzeichnet, daß im Inneren des Behälters (A) ein einen Ionenaustauscher enthaltender Behälter (B) vorgesehen ist, der die Behandlung der Flüssigkeit während der Aufbereitung des im Behälters (A) enthaltenen Ionenaustauschers sicherstellt.

2. Vorrichtung nach Anspruch 1, dadurch gekennzeichnet, daß der Behälter (B) ein geringeres Ionenaustauschervolumen als der Behälter (A) aufweist, daß besagtes Volumen jedoch ausreicht, um die Behandlung der Flüssigkeit während der Wiederaufbereitung der im Speicher (A) enthaltenen Ionenaustauscher zu gewährleisten.

3. Vorrichtung nach einem der vorangehenden Ansprüche, dadurch gekennzeichnet, daß die Verhältnisse der Ionenaustauschervolumina der Speicher (B) und (A) zwischen 1/12 und 1/5 betragen.

4. Vorrichtung nach einem dem vorangehenden Ansprüche, dadurch gekennzeichnet, daß die Einrichtung (3) zur automatischen Steuerung des Wiederaufbereitungszyklus der Ionenaustauscher den Wiederaufbereitungsvorgang des im Speicher (A) enthaltenen Ionenaustauschers in Abhängigkeit von den durch ein vorbestimmtes Ionenaustauschervolumen hindurchgetretenen Flüssigkeitsvolumina und von der Härte der behandelten Flüssigkeit, insbesondere Wasser auslöst.

5. Vorrichtung nach einem der vorangehenden Ansprüche, dadurch gekennzeichnet, daß die Einrichtung zur automatischen Steuerung des Wiederaufbereitungszyklus die Wiederaufbereitung des im Behälter (B) enthaltenen Ionenaustauschers unmittelbar vor dem Ingangsetzen dieses Behälters auslöst.

6. Vorrichtung nach einem der vorangehenden Ansprüche, dadurch gekennzeichnet, daß die Einrichtung zur automatischen Steuerung des Wiederaufbereitungszyklus die Dauer der Wiederaufbereitung des Ionenaustauschers des Behältes (A) während 30 bis 45 Minuten aufrecht erhält.

7. Vorrichtung nach einem der vorangehenden Ansprüche, dadurch gekennzeichnet, daß die Einrichtung zur automatischen Steuerung des Wiederaufbereitungszyklus der Ionenaustauscher die Aufbereitung in Abhängigkeit von der Menge der zur Aufbereitung zugeführten Flüssigkeit steuert.

## Claims

1. Apparatus for treating liquids by ion-exchange resins, in particular a domestic water softener, consisting of a vessel (A) containing an ion-exchange resin and provided with an automatic control device for the resin regeneration cycle, characterised in that the apparatus includes, arranged in the interior of the vessel (A), a vessel (B) containing an ion-exchange resin which ensures the treatment of the liquid during the regeneration of the resin contained in the vessel (A).

2. Apparatus according to Claim 1, characterised in that the vessel (B) contains a volume of ion-exchange resin less than that contained in the vessel (A) but sufficient to ensure the treatment of the liquid during the regeneration of the resins contained in the vessel (A).

3. Apparaturs according to one of the preceding claims, characterised in that the ratios of the volumes of resins of the vessels (B) and (A) are between 1/12 and 1/5.

4. Apparatus according to one of the preceding claims, characterised in that the automatic control device (3) for the resin regeneration cycle initiates the regeneration operation of the resin contained in the vessel (A) according to the volumes of liquid passed for a given volume of resins and the hardness of the liquid, in particular water, being treated.

5. Apparatus according to any one of the preceding claims, characterised in that the automatic control device for the resin regeneration cycle effects the regeneration of the resin contained in the vessel (B) immediately before the bringing into service of the latter.

6. Apparatus according to any one of the preceding claims, characterised in that the control device for the regeneration cycle maintains the length of regeneration of the resin of vessel (A) between 30 and 45 minutes.

7. Apparatus according to any one of the preceding claims, characterised in that the control device for the resin regeneration cycle controls the regeneration according to the amount of brine used.